# EUROPEAN PATENT APPLICATION

(11) **EP 1 419 825 A2**
(43) Date of publication of application: **19.05.2004**
(21) Application number: 03025654.9
(22) Date of filing: 07.11.2003
(51) Int. Cl.: B05B 15/06

(54) **Branching unit for fluid conveyance pipes, particularly for agricultural treatments or the like**

(30) Priority: 14.11.2002 IT MO20020329
(71) Applicant: Arag S.r.l., 42048 Rubiera (Emilia) (IT)
(72) Inventor: Medici, Daniele, 42100 Reggio Emilia (IT); Garuti, Alberto, 42048 Rubiera (Prov. of Reggio Emilia) (IT)
(74) Representative: Modiano, Guido, Dr.-Ing.

(57) **Abstract**

A branching unit for fluid conveyance pipes, particularly for agricultural treatments or the like, comprising a duct (3) provided with an inlet (8) that is associable with a bleed hole (22) formed in a pipe (2) for conveying a fluid, and with an outlet (9) that is associable with at least one nozzle (11) for dispensing the bled fluid, and a tubular body (12) provided with a first end (13) that is detachably associable with the inlet (8) and with a second end (14) that can be inserted detachably so as to fit substantially snugly in the bleed hole (22).

## Description

The present invention relates to a branching unit for fluid conveyance pipes, particularly for agricultural treatments or the like.

In the agricultural sector it is known that fluid products for herbicidal, fungicidal, insecticidal treatments or the like are spread on fields and crops by using sprinklers that are either fixed or towed by a tractor.

Sprinklers are substantially constituted by a chassis that supports a pumping unit that supplies one or more distribution bars with the fluid to be spread, which is drawn from a tank.

The horizontal or vertical bars are constituted by a supporting frame that is associated with the chassis and to which the fluid conveyance pipes are fixed.

Bleed holes are provided along the pipes, and a respective branching unit is fitted at each bleed hole; the diameters of the bleed holes vary according to the flow-rate of the fluid.

Known branching units are constituted by a duct provided with an inlet that couples to a bleed hole, an outlet at which one or more dispensing nozzles are fitted, and an optional branch that is associated with a valve, for example of the non-drip type or the like.

The inlet is extended by a perforated pin for centering and reference of the bleed hole; during the assembly of the branching unit on the conveyance pipe, the pin is inserted in the corresponding bleed hole with sealing gaskets interposed.

Moreover, the branching unit is provided with means for coupling to the conveyance pipe, for example of the collar or ring type.

Known branching units are formed monolithically.

These known branching units are not free from drawbacks, including the fact that since they are formed monolithically they must be manufactured in a very wide range of different models that differ from one another in terms of the dimensions of the centering pin, which vary according to the dimensions of the bleed hole with which they are to be associated; accordingly, this entails very substantial production costs and times and the provision of extensive and diversified inventory reserves by manufacturers and users.

Another drawback is that the centering pins wear and break very frequently, particularly due to the stresses to which they are subjected during ordinary use of branching units on agricultural sprinklers.

The wear and/or breakage of the centering pin entails complete replacement of the entire branching unit, with consequent high costs borne by the users and a waste of materials.

Finally, another drawback of known branching units is that the fluid that passes through them is subjected to significant load losses that have a negative effect on energy balances.

This last drawback is particularly felt for units which are formed monolithically and are provided with a branch for a non-drip valve; in this case, owing to their structure, it is in fact not possible to size and diversify the diameter of the inlet of their duct so as to contain load losses, since said diameter is constrained by the diameter of the bleed hole.

The aim of the present invention is to eliminate the above-noted drawbacks of known types of branching unit, by providing a branching unit for fluid conveyance pipes, particularly for agricultural treatments or the like, that allows to contain production times and costs, reduce the waste of materials and limit load losses.

Within this aim, an object of the present invention is to provide a branching unit that can be associated easily with any bleed hole of a conveyance pipe, allows to reduce the inventory reserves of manufacturers and users, further simplifying their management, and has improved resistance to wear and breakage.

Another object of the present invention is to provide a branching unit that is simple, relatively easy to provide in practice, safe in use, effective in operation, and has a relatively low cost.

This aim and these and other objects that will become better apparent hereinafter are achieved by the present branching unit for fluid conveyance pipes, particularly for agricultural treatments or the like, comprising a duct provided with an inlet that is associable with a bleed hole formed in a pipe for conveying a fluid, and with an outlet that is associable with at least one nozzle for dispensing the bled fluid, characterized in that it comprises a tubular body provided with a first end that is detachably associable with said inlet and with a second end that can be inserted detachably so as to fit substantially snugly in said hole.

Further characteristics and advantages of the present invention will become better apparent from the following detailed description of some preferred but not exclusive embodiments of a branching unit for fluid conveyance pipes, particularly for agricultural treatments or the like, illustrated by way of non-limitative example in the accompanying drawings, wherein:

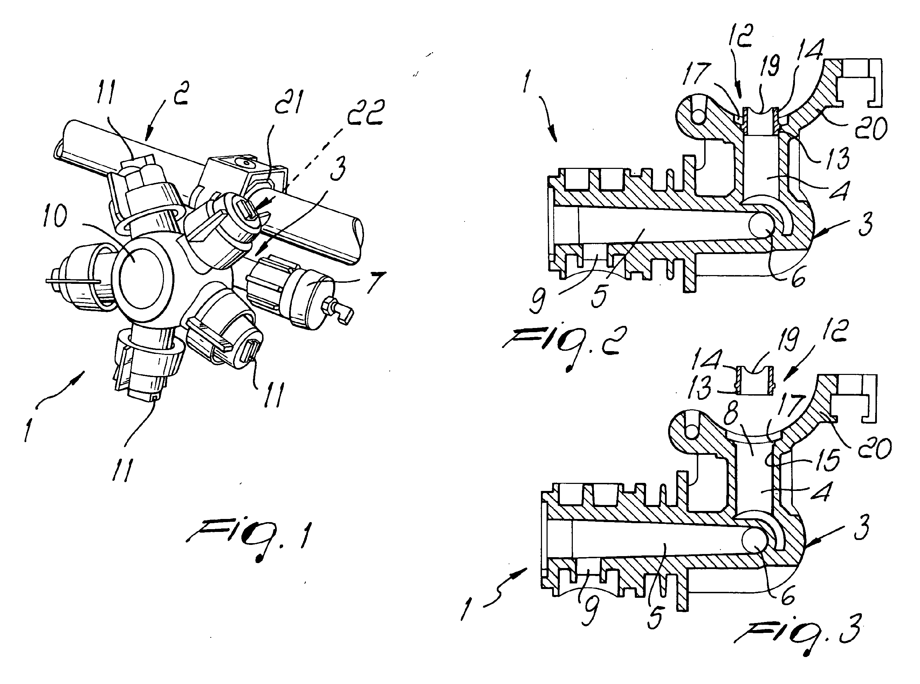

Figure 1 is a schematic axonometric view of a branching unit according to the invention provided with a plurality of dispensing nozzles and fitted on a fluid conveyance pipe for agricultural treatments or the like;
Figure 2 is a schematic sectional view of a detail of the unit of Figure 1;
Figure 3 is an exploded view of Figure 2;

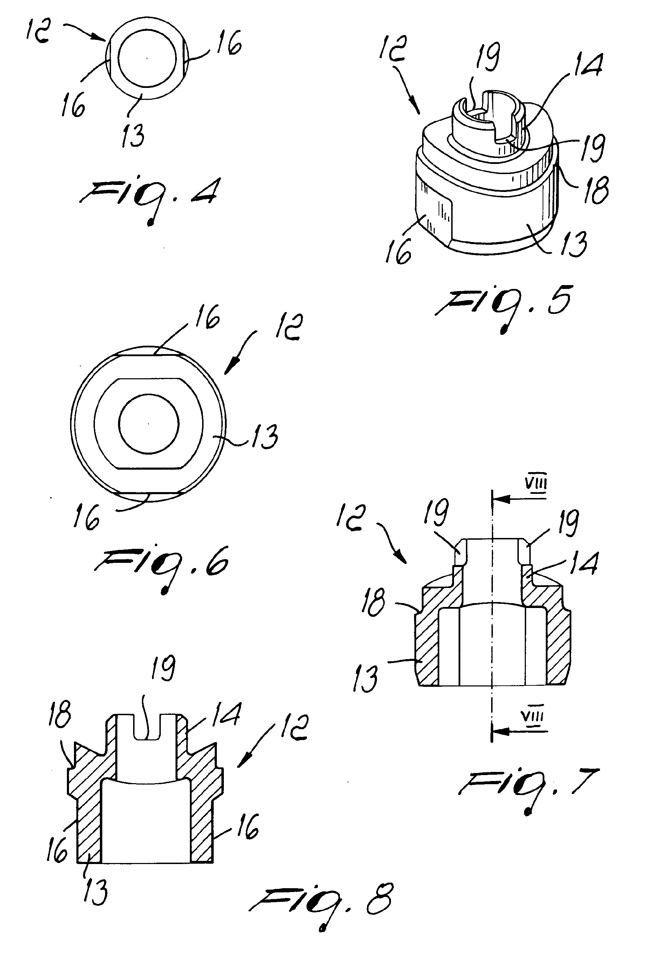

Figure 4 is an enlarged-scale schematic bottom plan view of the tubular body of the unit according to the invention;
Figure 5 is an enlarged-scale schematic axonometric view of an alternative embodiment of the tubular body of the unit according to the invention;
Figure 6 is a schematic bottom plan view of the tubular body of Figure 5;
Figure 7 is a schematic longitudinal sectional view of the tubular body of Figure 5;
Figure 8 is a schematic sectional view, taken along the line VIII-VIII, of the tubular body of Figure 7.

With reference to the figures, the reference numeral 1 generally designates a branching unit for fluid conveyance pipes, particularly for agricultural treatments or the like.

The unit 1 is fitted on fluid conveyance pipes 2 for agricultural treatments, for example herbicides, fungicides, insecticides or the like, which are in turn fixed to frames of distribution bars of agricultural sprinklers, which are not shown as a whole since they are of a conventional type.

The unit 1 comprises a duct 3, which is divided into an inlet portion 4, which is connected to an outlet portion 5 and to a branch 6 that is associated with a valve 7 of the non-drip type or the like.

The inlet portion 4 is provided with an inlet 8, which is associable with a bleed hole 22, provided in the wall of the pipe 2.

The outlet portion 5 is provided with an outlet 9, which is associable with a head 10 for supporting a plurality of selectively active nozzles 11 for dispensing the bled fluid.

The unit 1 further comprises a tubular body 12, which is provided with a first end 13 that is detachably associable with the inlet 8 and with a second end 14 that lies opposite the first end and can be inserted detachably and with a substantially snug fit in the bleed hole 22 of the pipe 2.

The body 12 acts as an element for reference and centering of the bleed hole.

Coupling means for mutual coupling, for example of the interlocking type, are formed between the first end 13 and the inlet 8.

In the embodiments shown in the figures, the coupling means are constituted by a seat 15 that is formed at the inlet 8 in order to accommodate the first end 13 and by two diametrically mutually opposite flat portions 16 that are formed on the outer side wall of the first end 13 and can be coupled substantially with a snug fit to a corresponding pair of complementary flat portions formed on the inner side wall of the seat 15.

The duct 3 comprises an annular seat 17 that is formed at the top of the inlet 8 in order to fit gaskets for providing a seal with the bleed hole 22.

The body 12 can comprise an annular receptacle 18 that is formed between the first end 13 and the second end 14 in order to contain such gaskets for providing a seal with the bleed hole 22.

At the second end 14 longitudinal notches 19 forming a slit are provided in order to facilitate the inflow of the fluid from the pipe 2 to the inlet portion 4 of the duct 3.

Advantageously, the first end 13 can have a transverse cross-section and particularly an inside diameter that are respectively larger than the transverse cross-section and inside diameter of the second end 14.

Moreover, the body 12 can have an inside diameter that is smaller than the inside diameter of the inlet 8 and/or of the inlet portion 4 of the duct 3.

At the inlet 8 a jaw 20 is provided to which another jaw 21 of a collar or ring-like coupling for mating the unit 1 to the pipe 2 is articulated; the two jaws 20 and 21 clamp the pipe 2 between them and are fixed to each other by bolts or the like.

The body 12 can be made of a different and mechanically stronger material than the duct 3; for example, it can be made of metal instead of plastics.

It is further possible to provide a range of bodies 12 that differ from each other in terms of the dimensions of the second end 14, which can vary according to the dimensions of the different bleed holes of the tubes 2, but have identical dimensions for the first end 13.

The different bodies 12 of a same range can be fitted on a same duct 3, which accordingly can be used more than once, both if the body 12 becomes worn or breaks, by replacing only the body 12 with another identical but intact body, and if the body needs to be applied to bleed holes of different dimensions, by replacing the body 12 with another body having appropriate dimensions.

The unit 1 is fitted by inserting the first end 13 of the body 12 in the seat 15, arranging a sealing gasket between the annular seat 17 and the annular receptacle 18 and by inserting the second end 14 of the body 12 in the corresponding bleed hole of the pipe 2.

The two jaws 20 and 21 are closed and fixed one another with bolts in order to anchor the unit 1 to the pipe 2.

The body 12 acts as an element for the centering and reference of the unit 1 with respect to the bleed hole of the pipe 2.

If the body 12 becomes worn or breaks, or if it is necessary to modify the pipe 2 and/or choose bleed holes having a different diameter, it is sufficient to remove the body 12 from the duct 3 and replace it with another identical and intact one or with another one having different dimensions, particularly the second end 14, according to the bleed hole.

In practice it has been found that the described invention achieves the intended aim and objects.

The branching unit according to the invention, being made of two separate parts that can be mutually coupled and detached with respect to each other, in fact allows to contain manufacturing times and costs, to reduce the inventory reserves of manufacturers and users, and to limit waste of materials.

The unit according to the invention allows to limit the load losses affecting the fluid that flows through it; it is in fact possible to size the tubular body alone, or rather its second end, according to the bleed hole of the fluid conveyance pipe, and to size the duct to which it is coupled so as to reduce the distributed or continuous load losses, particularly by widening the inside diameter of its inlet portion.

Finally, the unit according to the invention has a greater resistance to wear and breakage.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the scope of the protection of the appended claims.

The disclosures in Italian Patent Application No. M02002A000329 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A branching unit for fluid conveyance pipes, particularly for agricultural treatments or the like, comprising a duct (3) provided with an inlet (8) that is associable with a bleed hole (22) formed in a pipe (2) for conveying a fluid, and with an outlet (9) that is associable with at least one nozzle (11) for dispensing the bled fluid, **characterized in that** it comprises a tubular body (12) provided with a first end (13) that is detachably associable with said inlet (8) and with a second end (14) that can be inserted detachably so as to fit substantially snugly in the bleed hole of the pipe (2).

2. The unit according to claim 1, **characterized in that** said duct (3) comprises a branch (6) that is associable with a valve (7) of the non-drip type or the like.

3. The unit according to one or more of the preceding claims, **characterized in that** it comprises means (15) for coupling said first end (13) to said inlet (8).

4. The unit according to claim 3, **characterized in that** said coupling means (15) are of the interlocking type.

5. The unit according to claims 3 or 4, **characterized in that** said coupling means comprise a seat (15) for accommodating said first end (13) that is formed at said inlet (8).

6. The unit according to one or more of the claims 3-5, **characterized in that** said coupling means comprise at least one pair of diametrically mutually opposite flat regions (16), which are formed on the outer side wall of said first end (13) and can be coupled with a substantially snug fit to a corresponding pair of complementary flat regions formed on the inner side wall of said seat (15).

7. The unit according to one or more of the preceding claims, **characterized in that** said tubular body (12) comprises an annular receptacle (18), formed between said first (13) and second (14) ends, for gaskets for providing a seal with the bleed hole (22).

8. The unit according to one or more of the preceding claims, **characterized in that** said first end (13) has a transverse cross-section that is larger than the transverse cross-section of said second end (14).

9. The unit according to one or more of the preceding claims, **characterized in that** said first end (13) has an inside diameter that is larger than the inside diameter of said second end (14).

10. The unit according to one or more of the preceding claims, **characterized in that** said tubular body (12) has an inside diameter that is smaller than the inside diameter of said inlet (8) and/or of said duct (3).

11. The unit according to one or more of the preceding claims, **characterized in that** said tubular body (12) comprises at least one longitudinal slit (19) formed at said second end (14).
